(19) Europäisches Patentamt
European Patent Office
Office européen des brevets

(11) **EP 3 407 277 A1**

(12) **EUROPEAN PATENT APPLICATION**

(43) Date of publication:
**28.11.2018 Bulletin 2018/48**

(51) Int Cl.:
**G06Q 10/10** (2012.01)   **G08G 1/01** (2006.01)
**E04H 6/42** (2006.01)

(21) Application number: **18174322.0**

(22) Date of filing: **25.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2017  IT 201700057671**

(71) Applicant: **Carannante, Giuseppe
80070 Bacoli (NA) (IT)**

(72) Inventors:
• **CARANNANTE, Giuseppe
80070 Bacoli (NA) (IT)**
• **FERRARA, Gianluigi
81056 Sparanise (CE) (IT)**

(74) Representative: **Leone, Mario et al
Cantaluppi & Partners S.r.l.
Viale della Tecnica, 205
00144 Roma (IT)**

(54) **DEVICE FOR MANAGING PARKING PLACES**

(57)     A device (1) for the management of parking places in a parking lot where, for each vehicle received, there is a specific parking space specifically identified, and for which the presence of the vehicle received is to be detected and used using one or more sensors (2) which detect its presence at a predetermined parking place, wherein said sensors comprise respective flexible coils made of a flexible conductive wire, and wherein a plurality of said sensors is embedded in the thickness of a flexible carpet (3) suitable for covering a corresponding multiplicity of parking spaces and to be fixed to the ground.

Fig. 1

**Description**

The present invention relates to a device for managing parking places in a parking lot, in which each incoming vehicle is provided with a suitable parking space specifically identified, and whose presence is to be detected and managed, using one or more sensors that detect the presence of the vehicle at a predetermined parking space.

Various types of parking space management devices are known, intended for vehicles such as cars and the like.

For example, U.S. Patent No. 3,588,806 A (1971) describes a device operating with an inductance coil for detecting a vehicle at a parking space. The device in question is embedded into the surface of the parking space and is individually connected to a parking meter.

The British patent application No. GB 2,293,679 A (1996) describes an apparatus for monitoring numerous parking spaces, each provided with an inductive loop sensor, connected to a computerized management system. The coil is inserted in the surface of the parking spaces, so as not to be accessible, embedded in the pavement.

U.S. Patent No. 6,535,143 B1 describes a system for detecting car parking for the purpose of managing parking payment. This system employs looped antennas embedded on the ground, connected to a management system that controls access to parking and the related payment.

The US patent application No. 2005/280,555 A1 describes a dynamic system for managing a set of parking lots. Although a particular type of sensor is not described, it is specified that one is applied to each parking space, with a relative receiver of the signal produced by the sensor, which is installed on the ground. Data communication between sensors and servers takes place wirelessly.

The Chinese patent application No. CN 10 2,800,212 A describes an Internet parking management system that employs sensors and elaborates optimal routes for parking search, without describing particular sensors.

The US patent No. 7,014,355 B2 describes a system for measuring the presence of cars in a parking lot, and includes spiral sensors embedded in the surface of the parking spaces, or in their flooring.

US patent application No. 2006/0,136,131 A1 describes a parking management system with a variety of magnetic sensors. They can be accommodated in a hollow curb or kerb made of rubber or the like, rather than buried on the ground. This system implements a multiplicity of management functions but implies that each parking space is delimited by elements protruding from the pavement, which may be the object of faults or removal. Equivalently, U.S. Patent No. 9,196,097 B2 describes a parking meter with a detection sensor arranged on a support rod.

US patent application No. 2008/0,136,674 A1 describes an intelligent navigation apparatus in a parking lot, with a network of sensors permanently connected to the ground, to prevent their removal, which therefore require complex paving preparation operations.

International patent application No. WO 2008/104,053 A1 describes a method for controlling vehicles in a parking lot that receives a vehicle exit signal from wireless sensors placed on the ground, embedded in the asphalt.

US application No. 2011/0,270,669 A1 describes a parking locator capable of processing parking fees and which employs multiple sensors inserted in appropriate curbs which do not therefore require to be inserted in the parking surface itself and which are connected to a server wirelessly.

International application No. WO 2014/012,132 A1 describes an automatic parking management system, which follows rules based on signals received from wireless sensors, buried in the parking surface.

The Chinese patent application No. CN 10 3,617,727 A describes a multi-user system for cloud-based parking, with loop detectors drowned on the ground.

US patent No. 8,723,688 B describes a wireless unit for detecting vehicles, intended to be buried.

US patent No. 7,619,543 B1 discloses a mat to be placed on the floor of a garage, including embedded pressure sensors to detect a car parked therein.

US patent application No. 2008/0,316,056 A1 discloses a parking guidance system having a plurality of sensors distributed among a series of parking places.

US patent application No. 2002/0,109,609 A1 discloses a parking meter system having inductance coils buried into the ground.

As can easily be seen, in many cases it is expected that sensors will be buried or drowned in the parking paving, then in the surface layer of asphalt, concrete or beneath tiles or the like. This device, designed to prevent the sensors from being removed, for example because they are made of precious copper material, or damaged, makes maintenance difficult, while the connection of power supply systems to a network for data management is difficult because it must be appropriately assembled on the site of the parking lot, with interventions of a building nature as well as electrical.

On the other hand, in the case in which the sensors are arranged outside the flooring, they must be housed in artefacts well anchored to the ground, to prevent their removal or displacement.

The technical problem lying at the roots the present invention is to provide a device for managing parking spaces that allows to overcome the aforementioned drawback with reference to the prior art.

This problem is solved by a device as above specified, wherein a plurality of sensors is embedded in the thickness of a carpet able to cover a corresponding multiplicity of parking spaces and to be fixed to the ground, as defined in the attached claim 1.

Therefore, the carpet can be directly applied to the existing road surface, without particular preparation work, and allows to detect if the parking stalls are occupied or not; the sensors are programmed to detect the presence of cars and the distance between them so as to be able to suggest if the available stall is suitable for the requesting vehicle.

In a preferred embodiment of the present invention, the management device is provided with low consumption radio transmitters operating in wireless mode, directly integrated into the thickness of the carpet.

Furthermore, receivers can be provided that encrypt the information sent by the sensors and send them to a dedicated server, a software platform capable of generating a digital map of the managed parking lot, given by the interaction of the standard road maps with the signaling of free stalls.

In this regard, it can be noted that a parking space of any size can accommodate a plurality of devices as outlined above, integrated with each other in a network that is connected to a single server that manages the map of all available parking spaces.

Here and in the following, by car place it is meant for the sake of conciseness a single parking space suitable to be occupied by a vehicle. It is intended that by changing the dimensions of the vehicle, from a simple motorvehicle to a truck for example, the size of the intended stall will change accordingly, and this device is not limited by the type and size of the vehicle intended to occupy the parking lot.

Such a system can be associated with a client software through which the user finds the map updated in real time on his own mobile device or on a navigation device integrated into the vehicle, which will suggest the fastest route to reach one of the places free available at that time.

The present invention will hereinafter be described according to a preferred embodiment thereof, given as a non-limiting example with reference to the accompanying drawings in which:

- Figure 1 shows a general scheme which illustrates the management device for parking spaces according to the present invention;
- Figure 2 shows a perspective view from above of a first component of the device of Figure 1;
- Figure 3 shows a perspective view from below of a second component of the device of Figure 1;
- Figure 4 shows a side perspective view of a third component of the device of Figure 1;
- Figure 5 shows a side perspective view showing the assembly of the first, second and third components of Figures 2, 3 and 4;
- Figure 6 shows a block diagram illustrating the operation of the sensors in the device of Figure 1;
- Figure 7 shows a diagram of an example of sensor usable in the device of Figure 1; and
- Figure 8 shows a block diagram illustrating the integration of several sensors in a network in the device of Figure 1.

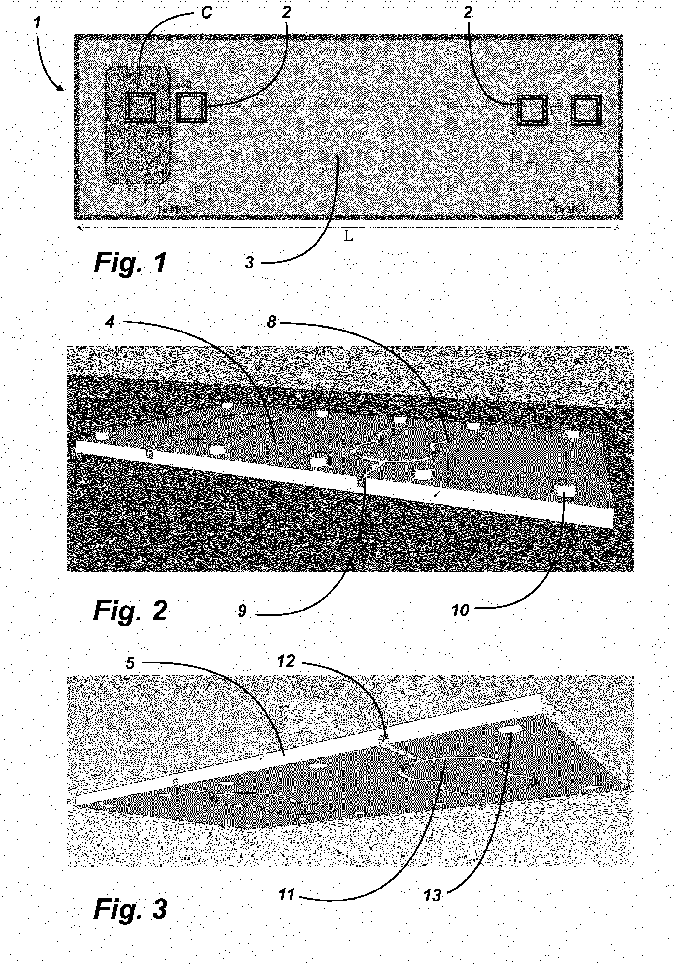

With reference to the figures, a device for managing a certain number of parking spaces, arranged side by side, or in line, is indicated by 1. In Figure 1 the parking spaces are arranged side by side, but this is obviously one of the possible examples of the device, and they are arranged to be occupied by a vehicle C, shown schematically.

Here and in the following, for brevity and simplicity with the term car or car is indicated any vehicle that could occupy a parking space. Obviously, parking lots may be provided for vehicles other than cars, from motor vehicles to large transport vehicles, including trailers. Obviously, in the case of different vehicles, the dimensions of the stalls and devices designed to detect the presence of vehicles will change.

In the present example, the device described is intended to occupy a parking space having a length of L meters, along which a number of N parking places are arranged side by side; at each car stall there is a sensor which comprises a respective coil 2 made of at least one conductive material wire, such as copper.

The coils 2 are arranged along the longitudinal center line of the device 1, equally spaced to each other. A vehicle in the parking lot will be identified, considering the mass of ferromagnetic material thereof, by the coil whose magnetic field is concatenated with the vehicle itself. From the knowledge of the position of the coil, it is possible to obtain both the identification of the stall or the occupied parking space, and the number of free stalls obtained from the sum of the number of free stalls to the right of the occupied stall and the number of free stalls to the left of the occupied stall.

It is also intended that, for each parking space, the device 1 could comprise several sensors, i.e. more coils or other additional sensors of other type, both to obtain a redundancy and to compute the distance between the vehicles present, at least in a reliable manner, in case they do not exactly occupy a stall conventionally identified by lines drawn on the ground.

The device 1 according to the invention comprises a flexible mat or caprpet 3, made of a durable and resistant material, for example rubber, in particular rubber obtained from the recycling of used tires which is supplied in granular form with granules of various sizes.

This type of rubber, obtained by means of suitable treatments, is combined with polyurethane resins and thermoplastic polymers to form layers which will achieve the carpet 3 of the management device 1.

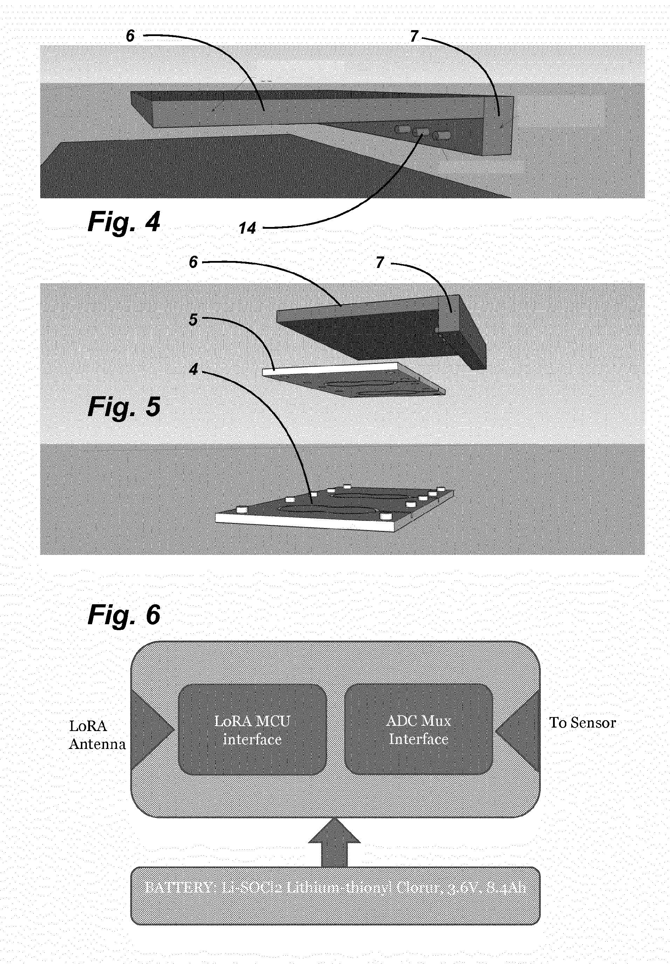

The carpet 3 is subdivided into four distinct components: a layer of lower substrate 4 (figure 2) made of rubber, a layer of upper substrate 5 (figure 3) made of rubber, a surface finish layer 6 (figure 4) made of rubber, and an abutment 7 (figure 4), which assembled have a predetermined thickness, preferably included between 10 and 20 mm.

With reference to Figure 2, the lower substrate layer 4 consists of a rubber granule sheath suitable for being fixed directly to the road surface, with a thickness of, for example, 5 mm.

The lower substrate layer 4 comprises a plurality of lower grooved channels 8 designed to contain the coils 2: in the illustrated example the channels 8 have a bilobated shape and have a lower exit section 9. For example, the groove depth is of 3 mm, so that the distance between the coil and the road surface is at least 2 mm.

The lower substrate layer 4 is designed to ensure the necessary adhesion between the carpet 3 and the road surface, and a resistance to external factors, such as the temperature reached by the road surface in summer or winter, but above all to improve the flatness of the road surface.

The lower substrate layer 4 includes pins 10 projecting from the upper face thereof, directed upward.

The upper substrate layer 5 (figure 3) is substantially specular with respect to the lower substrate layer 4. It has a plurality of upper grooved channels 11 complementary to the aforementioned lower grooved channels 8 and designed to form, once overlapped and coupled, a housing for the coils 2. As for the lower substrate layer 4, also the upper substrate layer 5 complementary to the aforementioned lower output portions 9 and designed to form, once overlapped and coupled, an output channel for each coil 2.

Moreover, the upper substrate layer 5 comprises a plurality of recesses 13 adapted to receive said pins 10, to determine geometric references such as to ensure the coupling between the grooved channels and the lower outlet sections 8, 9 and the grooved channels and the upper exit 11, 12.

The rubber-based material with which the upper substrate layer 5 is made is similar to the material of the lower substrate layer 4.

The magnetic coil that embodies the sensors of the device 1 must be inserted into the grooved channels; it is covered with a waterproof and resistant rubber to ensure a longer life to the system. It determines the oscillation frequency together with the capacitive counterpart present on a slave board. For each stall there will be one to four coils depending on the distance resolution you want to obtain.

An example of a coil for the present application has a diameter of 25 cm, but it is intended that this measurement may vary according to the specific needs of the device.

The upper and lower substrate layer 4, 5, once coupled, are glued along their perimeter. As an example, their overall thickness can be 9 mm.

The carpet 3 further comprises a rubber surface finish layer 6, which is intended to provide the external appearance and the support surface of the device 1. It is fixed to the upper substrate layer 5 and it may have a thickness of 5 mm. From the point of view of the technical specifications, this layer must have a high resistance to wear and to atmospheric agents.

Preferably, it is made of a porous material, a rubber-based compound, which makes the carpet 3 draining, so as to guarantee greater safety and durability to the system. The rubber finishing layer can be customized according to the customer and the installation site and can be completed with a layer of anti-trauma flooring (cert EN1177) or with a synthetic grass finish.

At a longitudinal edge of the carpet 3, the device comprises an abutment 7 which is an integral part of the surface finishing layer 6 and extends longitudinally to the carpet 3, i.e. along the maximum dimension of the standard parking carpet, in front of the pavement, or facing towards the edge of the road surface, either a sidewalk, a curb, a wall or similar.

It is made by a rubber strip specifically shaped, and it has a thickness such that it is placed between the upper substrate layer 5 and the surface finishing layer 6, ensuring the planarity of the upper surface of the surface finishing layer 6. The abutment 7 is joined to the aforesaid layers 4, 5, 6 thanks to a locking system with pins 14 projecting towards the inside of the carpet 3 (figure 4), specifically designed to keep the rubber layers subjected to different loads aligned.

The abutment has at least one channel accommodating the communicating slave cards, one for each loop, through coaxial cables.

The slave cards are arranged sequentially inside the abutment 7, and they communicate to each other through coaxial cables. The slave cards are managed by a master card placed at one end of the abutment 7.

The architecture described is structured for a standard matrix, validated with respect to the dimensions of a parking stall.

Depending on the different types of parking, the matrix positioning scheme will be designed, having a length relative to the type of stall, with an approximate width between 1.0 and 1.5 m. The continuity of the system is guaranteed by the union of several matrices that follow the principle described above. Each matrix is in fact joined to the other thanks to a locking system with pins.

The architecture of the device described above will be presented in greater detail below.

The carpet 3 of the management device 1 is applied to the road surface and allows to detect if the parking stalls are occupied or not: the carpet 3 comprises a thin band of coil sensors 2 programmed to detect the presence of cars and the distance therebetween, so that to suggest if the available stall is suitable for the requesting vehicle.

The device 1 is also equipped with low-power radio transmitters which operate wireless for the formation of a network, for example of the LORAWAN®type (figure 6).

The system architecture consists of:

- Magnetic sensors: magnetic loop for the detection of metallic objects and, therefore, of cars.

- *1-Wire Network Linear Topology:* local area bus network for wired communication of information from the magnetic sensor to the LORA module and vice versa.

- *LoRA MCU Interface:* wireless communication interface between the device and the IIOT gateway.

- Autonomous power supply: the system is designed to be electrically powered by a battery 18 with long-term autonomy of not less than 5 years (Li-SOCl2 Lithium-thionyl Clorur, 12V, 8.4Ah).

The material with which the carpet is made is characterized by an adequate flexibility and mechanical strength such as not to cause mechanical damage to the electronics of the sensors and the magnetic coils underlying when the cars occupy the stalls.

The environmental design stresses for the device 1 include an extended thermal range (from -45 ° to + 85 °) and an IP68 index for the mechanical protection case.

The basic principle of operation on which the management device 1 is based is the phenomenon of mutual magnetic coupling.

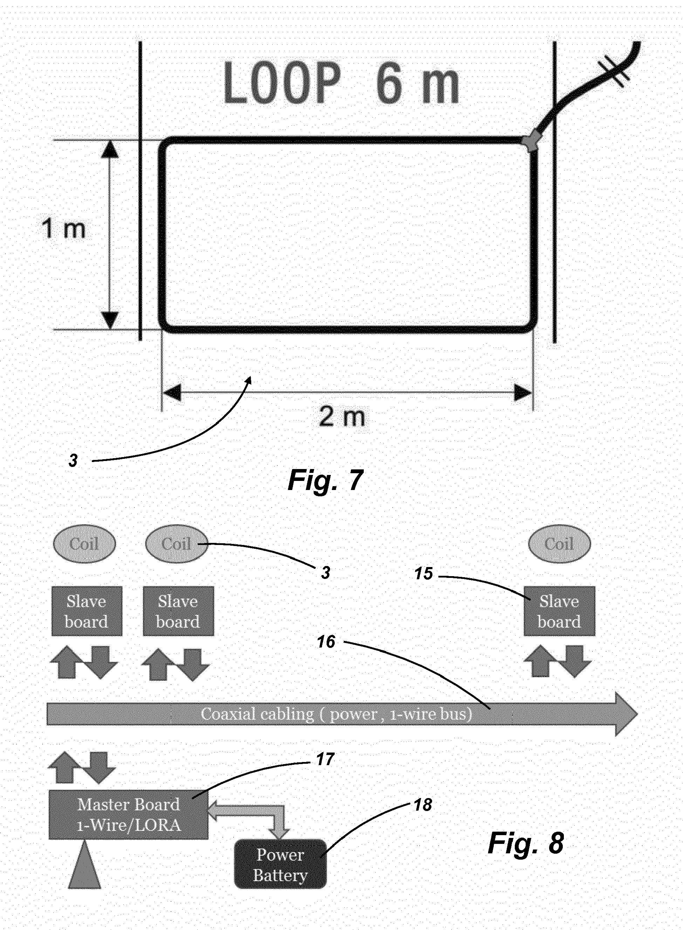

With reference to fig. 8 a schematic representation of the hardware architecture of a node of the network of the device is shown, consisting of "n" sensors for the management of a car park of K places (in general K <n).

The sensors 2, located at the parking spaces, are made of magnetic coils and they are electrically affected by a known frequency current wave, produced by a special oscillator, which generates a magnetic field that changes through the time: when a car occupies a space, it will be affected by the flow of the magnetic field which will inevitably connect with it from the coil. This magnetic coupling is translated into a variation of the magnetic inductance of the sensor circuit to which a variation of the current wave frequency corresponds. Thanks to the presence of a phase detector (PLL), provided in the sensor electronics, or in the slave board 15, this frequency variation is intercepted by transforming it into a corresponding variation of the electric voltage (VCO). The electric voltage demodulated by the PLL is compared with a reference voltage that relates to a voltage comparator; and the result of the comparison (presence/absence of the car) is sent to a 1-Wire ® interface which will transmit it, via cable 16 and only on command, to the corresponding node present in the electronics of the master card 17.

The wireless interface, provided therein, will record the result of the command in its internal memory due to the presence of a complete 32-bit *ARM-based chipset*. In order to compose the global status of the stalls, the ARM microcontroller will execute, sequentially and for all the managed sensors, the status query that, at the end of the procedure, can then send (but only by a previous request), via the LORA network, to an external gateway for processing it.

The master card 17 is the link between the LORA wireless network and the system management server, which is a device or a set of devices.

The functionality of the master card 17 is described through the definition of the interfaces that make it up, ie power supply from the battery, LORA MCU interface and *1-Wire* Master interface.

The slave board is the interface between the 1-Wire bus and the actual magnetic sensor; also the functions of the slave board are described through the definition of its interfaces: power supply: the board receives the power supply through the coaxial connector (BNC) P2 which redirects to the components present in it; *1-Wire Slave* interface; interface with the loop module.

In turn, in the present example, the magnetic sensor 2 is a magnetic loop realized by performing four electric windings of rectangular cross-section, as shown by way of example in Figure 7.

In order to minimize the undesired effects of mutual coupling between adjacent turns, the section of the same will be preformed during the installation of the carpet.

Since the magnetic field has a radial pattern with respect to the plane of the loop, with an intensity that decays quadratically with the distance, layouts of the same coil different from the rectangular one can be used.

The algorithm implemented by a generic node of the device 1 allows to determine all the parameters necessary for the management of the relative parking spaces.

Considering a linear parking of known length L and known width H without definition and/or delimitation any of the stalls used to stop, and also assuming that along the parking centreline $N_s$ mutually identical magnetic coils are arranged, having a rectangular cross-section with a length $l_s$ and a width $h_s$, $h_s > l_s$, and the coils are arranged with the long side $h_s$ parallel to the width H of the road,

$$A_s = l_s * h_s$$

is the area of each magnetic coil. Because of the undesired effects of mutual coupling between adjacent coils, the minimum area of "effective measurement" corresponding to each magnetic coil is characterized by a larger area equal to:

$$A_m = l_i * H \quad i = 0 \dots (N_s - 1)$$

having denoted by $l_i > l_{ss}$ the minimum separation distance between the coils themselves. Apparently, this parameter corresponds to the measurement accuracy of the whole system. Assuming that:

$$l_i \equiv l_0 \equiv constant \quad with \ i = 0 \dots (N_s - 1)$$

therefore:

$$N_s = {}^{L}/_{l_0}$$

$$\tilde{L} = N_s * l_0$$

with

$$\left|(\tilde{L} - L)\right| < l_0$$

The algorithm described here implies the introduction of the standard model of the car, that is a car with a rectangular section of size $l_a * h_a$ with:
$l_a = k l_0$ and $h_a = h_s$, $k$ being an integer
It is noted that, to ensure that the single coil effectively correspond to the LSB of the measurement, it is assumed the following behavior (edge effect):

coil completely covered by the car: LSB = 1
coi partially covered by the car: LSB = NA

It is immediate to obtain, by construction of the model, that the total parking area can be expressed as follows:

$$Ap = \sum_{i=0}^{Ns-1} Am(i) = \sum_{i=0}^{Ns-1} H * li = H * \hat{L}$$

To identify the dynamic polygonal coverage, that is, the area covered (or free) of the parking lot in a generic instant it is useful to define the following functions:

$$\forall i = 0 \dots Ns - 1 \ idle\big(Am(i)\big) = \begin{cases} 1 \ if \ Am(i) \ is \ partially \ covered \\ 0 \ if \ (Am(i) \ is \ fully \ covered \end{cases}$$

$$\forall i = 0 \dots Ns - 1 \ busy\big(Am(i)\big) = \begin{cases} 0 \ if \ Am(i) \ is \ partially \ covered \\ 1 \ if \ (Am(i) \ is \ fully \ covered \end{cases}$$

Furthermore

$$\forall i = 0 \dots Ns - 1 \ idle\big(Am(i)\big) + busy\big(An(i)\big) = 1$$

this relationship must be considered in a probabilistic and non-deterministic way as it expresses the law of total probability applied to the distribution of the coils in the parking lot, i.e. it is a probabilistic and non-deterministic law due to the behavior assumed for the generic coil to which a generic error in the measurement of distances occurs, equal to $1_0$.

With the introduction of the logical functions *idle*() and *busy*(), it is immediately clear that:

$$Tot_{idle_{Area(t)}} = \sum_{i=0}^{Ns-1} idle\big(Am(i)\big) * Am(i) = \sum_{i=0}^{Ns-1} \big[1 - busy\big(Am(i)\big)\big] * Am(i) =$$

$$= H * [\tilde{L} - \widetilde{L\,busy}]$$

$$N_{vehicle_{standard}}(t) = \left[\!\left[\frac{\widetilde{L\,busy}}{la}\right]\!\right]$$

where $\widetilde{L\,busy}$ indicates the total length occupied at the instant $t_a$ which directly corresponds the estimate to the first order on the number of standard cars or vehicles present therein.

In the same way, it is obtained that:

$$Tot_{Busy_{Area}} = \sum_{i=0}^{Ns-1} busy\big(Am(i)\big) * Am(i) = \sum_{i=0}^{Ns-1} \big[1 - idle\big(Am(i)\big)\big] * Am(i) =$$

$$= H * [\tilde{L} - \widetilde{L\,idle}]$$

where $\widetilde{L\,idle}$ indicates the total free length at the time $t_a$ in which the first-order estimate directly corresponds to the number of parking spaces available for standard cars.

Therefore, it can be concluded:

$$N_{places_{standard_{available}(t)}} = \left[\frac{\widetilde{L\,idle}}{la}\right]$$

The data structure that has been assumed for the implementation of the parking management procedures is the data type "abstract linear list", applied to the sections containing the individual coils.

The methods that typically apply to the management of the "linear list" type find a direct correspondence to the parking management procedures:

- *full*(), *empty*(): return the corresponding Boolean global status information of the list (parking);

- *idle*(), *busy*(): return the corresponding Boolean information of local status of the elements of the list (sections containing the individual turns);

- *push*(), *pop*(): respectively indicate the methods for inserting / deleting that group of elements of the list corresponding to the arrival departure of a car (whose dimensions are expressed in a "standard car").

It is noted that the feature of the *pop*() and *push*() methods applied to parking management is that of being implicit methods and not explicit methods as, instead, it happens traditionally in the management of the list type. More precisely, since the arrival and departure of the cars is a random process, the status of the list changes implicitly over time. Then, to correctly determine the status of the list itself, the need arises to manage a regular and cadenced interrogation process of all the elementary cells.

The data structures on which the state query process is processed is defined as follows:

```
#define IDLE 1

#define BUSY 0
```

*struct Contiguous_Stalls:*

*{*

    *int Num;*

    *boolean attribute;*

    *Stall_List[Ns];*

*}Contiguous_Stalls_List[Ns];*

where the first field *int Num* indicates the number of cells contiguous with respect to the *attribute boolean attribute* that can only assume the values IDLE (TRUE) and BUSY (FALSE).

```
Stall_List [Ns] is the specific lis of contiguous stalls,
```

*struct Busy_Contiguos_Stalls:*

*{*

    *int Num;*

    *Contiguos_Stalls_List[Ns];*

*}Busy_Contiguous_List[Ns];*

it represents the list of contiguous stalls with respect to the IDLE attribute; the first field indicates the number of lists of contiguous stalls of which the list is composed.

The above procedure *P-Carpet_Searching ()*, as anticipated, searches, at time t, in the *stalls_list [Ns]* list the list of all the stalls contiguous with respect to the IDLE and BUSY attribute. These lists allow to determine the complete status of the parking being managed

The software that manages the use of the device consists of a cloud platform and a dedicated client app.

Both, in different ways, support the provision of various services for different users: municipalities, drivers, individuals.

The cloud platform supports the integration of existing hardware and software, allowing the management of mobility services on a single platform.

Thanks to the variety of services offered and their centralization with a simple and intuitive interface, it increases the effectiveness of urban mobility.

Therefore, the device according to the invention is capable of generating real and immediate pieces of information, and it is able to reduce the burden and stress in the search for free parking as the only data necessary are the type of car you are driving and where you are directed.

In addition, it is possible to have a specific system for helping people with disabilities, providing the necessary tools to respond to abuse, inconvenience and ensure prompt assistance. In fact, this device is able to detect if the stall used for the disabled is occupied correctly or illicitly thanks to any type of tag, applied to the vehicle, that the device can detect. If the stall is unlawfully occupied, the device can notify both the authorities and the disabled person before he reaches his destination, so as to be able to promptly report the abuse.

Through the cloud platform it is possible to offer a variety of services that, thanks to their nuances, are transformed into consistent solutions, for example:

- parking payment: users will be able to pay the parking fee correctly with constantly updated rates and for the duration actually required; the stop can also be extended by paying the extra parking fee thanks to the dedicated app;

- reminder: to remember the end of the booked parking, with an alarm that warns that the rate paid for the stop is about to end, so the user decides whether to prolong or end it;

- navigator: marked the destination and activated the navigator, all that remains is to get comfortable and be accompanied to the free stalls in its vicinity;

- car search: allows you to find the car when you do not remember where it was parked, as its location can be geolocated;

- anti-theft: the user can be notified in case of removal of the vehicle from the stall;

- parking reservation: in particular for private parking lots.

To the above described management device, a person skilled in the art, in order to satisfy further and contingent needs, may make numerous further modifications and variations, all of which however included within the scope of protection of the present invention, as defined by the appended claims.

**Claims**

1. A device (1) for managing parking places in a parking lot wherein, for each incoming vehicle, a suitably identified specific parking space is provided, to detect and manage there the presence of the incoming vehicle by using sensors detecting the presence thereof at a predetermined parking place, comprising:

    • a flexible carpet (3) apt to cover a corresponding plurality of parking spaces and to be fastened to the ground
    • a plurality of flexible coils (2), implemented by a flexible conducting wire embedded in the thickness of said flexible carpet (3),

    wherein said coils produce signals which are sent, through dedicated slave boards connected to at least one master board, to a control unit comprising a software whereby said signals are processed by means of a probability function, for determining the number of free parking places, relying on the area covered by each coil, on the distribution of the coils through the parking lot, and on the nominal sizes of a vehicle to calculate the free distance between vehicles existing in the parking lot.

2. The device (1) according to claim 1, wherein the carpet (3) comprises a lower base layer (4) apt to be applied to the road surface; an upper base layer (5) placed above the lower base layer (4) to implement grooved channels for said coils (2) therebetween; and a surface finishing layer of (6) forming the floor surface of the device (1), wherein, at a longitudinal edge of the carpet (3), an abutment (7) is provided which is parte of the surface finishing layer (6), developing longitudinally to the carpet (3), and having channels to receive the communicating slave boards, one for each coil (2), through coaxial cables.

3. The device (1) according to claim 1, wherein said coils (2) are arranged along the longitudinal centre line of the carpet (3), equidistant therebetween.

4. The device (1) according to claim 1, wherein the carpet (3) is made of rubber, in particular rubber obtained from the recycling of wasted tyres, combined with polyurethane resins and thermoplastic polymers.

5. The device (1) according to claim 2, wherein the lower base layer (4) comprises a plurality of lower grooved seats (8) intended to contain the coils (2), and wherein the upper base layer (5) comprises a plurality of upper grooved seats (11) complementary to the above-mentioned lower grooved seats (8) and intended to form, once overlapped and coupled, a housing for the coils (2).

6. The device (1) according to claim 2, wherein the lower base layer (4) comprises pins (10) projecting from the upper face thereof, faced upwards, and wherein the upper base layer (5) comprises a plurality of recesses (13) apt to receive said pins (10), to determine geometrical references so as to guarantee the coupling between said grooved seats (8, 9).

7. The device (1) according to claim 2, wherein the lowe and upper base layers, once coupled, are glued along the periphery thereof.

8. The device (1) according to claim 2, wherein the surface finishing layer (6) is made of a porous material making the carpet (3) draining.

9. The device (1) according to claim 1, wherein low consumption radio transmitters are provided which work in wireless mode to form a network.

10. The device (1) according to claim 1, wherein the following is provided:

   • magnetic sensors, having magnetic coil, for detecting metal objects and, then, motor vehicles;
   • *1-Wire Network Linear Topology*: local bus network at the carpet for the wired communication of information from the magnetic sensor towards LORA module and viceversa;
   • *LoRA MCU Interface*: wireless interface communicating between the device and IIOT gateway.
   • one or more batteries (18) with long-lasting autonomy, not lower than 5 years (Li-SOCl2 Lithium-thionyl Clorur, 12V, 8.4Ah).

**Fig. 1**

**Fig. 2**

**Fig. 3**

6 7

**Fig. 4**

14

6 7

5

4

**Fig. 5**

**Fig. 6**

| LoRA Antenna | LoRA MCU interface | ADC Mux Interface | To Sensor |

BATTERY: Li-SOCl₂ Lithium-thionyl Clorur. 3.6V, 8.4Ah

## LOOP 6 m

1 m

2 m

3

**Fig. 7**

Coil    Coil    3    15    Coil

Slave board    Slave board    16    Slave board

Coaxial cabling ( power , 1-wire bus)

17

Master Board 1-Wire/LORA    18

Power Battery    **Fig. 8**

Europäisches
Patentamt

European
Patent Office

Office européen
des brevets

## EUROPEAN SEARCH REPORT

Application Number

EP 18 17 4322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 619 543 B1 (TODINCA MARIUS G [US]) 17 November 2009 (2009-11-17) * column 1, line 11 - column 1, line 25 * * column 2, line 27 - column 3, line 32 * * figures 1,2,3,5 * | 1-10 | INV. G06Q10/10 G08G1/01 E04H6/42 |
| A | US 2008/316056 A1 (GHATAK PARIJAT [US]) 25 December 2008 (2008-12-25) * paragraph [0024] - paragraph [0024] * * paragraph [0033] - paragraph [0033] * * figure 1 * | 1-10 | |
| A | US 6 515 586 B1 (WYMORE BEN S [US]) 4 February 2003 (2003-02-04) * column 3, line 18 - column 7, line 9 * * column 9, line 13 - column 10, line 56 * * figures 1-3 * | 1-10 | |
| A | US 2002/109609 A1 (POTTER THOMAS R [US] ET AL) 15 August 2002 (2002-08-15) * paragraph [0046] - paragraph [0046] * * paragraph [0087] - paragraph [0088] * * paragraph [0106] - paragraph [0106] * * paragraph [0111] - paragraph [0111] * * paragraph [0115] - paragraph [0117] * * figures 1,2,3A * | 1-10 | TECHNICAL FIELDS SEARCHED (IPC) G06Q G08G E04H |

-/--

The present search report has been drawn up for all claims

| Place of search | Date of completion of the search | Examiner |
|---|---|---|
| Munich | 30 July 2018 | Melis, Caterina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 18 17 4322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | M.Y.I. Idris ET AL: "Car Park System: A Review of Smart Parking System and its Technology", Information Technology Journal, 31 December 2009 (2009-12-31), pages 101-113, XP055434204, 308 Lasani Town, Sargodha Road, Faisalabad - Pakistan DOI: 10.3923/itj.2009.101.113 Retrieved from the Internet: URL:http://docsdrive.com/pdfs/ansinet/itj/2009/101-113.pdf [retrieved on 2017-12-12] * page 105 - page 106 * * page 109 - page 109 * ----- | 1-10 | |

TECHNICAL FIELDS
SEARCHED     (IPC)

The present search report has been drawn up for all claims

| Place of search | Date of completion of the search | Examiner |
|---|---|---|
| Munich | 30 July 2018 | Melis, Caterina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 17 4322

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2018

| Patent document cited in search report | | Publication date | Patent family member(s) | Publication date |
|---|---|---|---|---|
| US 7619543 | B1 | 17-11-2009 | NONE | |
| US 2008316056 | A1 | 25-12-2008 | NONE | |
| US 6515586 | B1 | 04-02-2003 | NONE | |
| US 2002109609 | A1 | 15-08-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3588806 A
- GB 2293679 A
- US 6535143 B1
- US 2005280555 A1
- CN 102800212 A
- US 7014355 B2
- US 20060136131 A1
- US 9196097 B2
- US 20080136674 A1
- WO 2008104053 A1
- US 20110270669 A1
- WO 2014012132 A1
- CN 103617727 A
- US 8723688 B
- US 7619543 B1
- US 20080316056 A1
- US 20020109609 A1